# EUROPEAN PATENT APPLICATION

(11) **EP 3 991 856 A1**
(43) Date of publication of application: **04.05.2022**
(21) Application number: 21205517.2
(22) Date of filing: 29.10.2021
(51) Int. Cl.: B05D 3/04, B05D 3/06, C01B 21/04, F26B 3/28, F26B 21/14, C08F 2/50

(54) **OVEN FOR UV-DRYING IN INERT ATMOSPHERE**

(30) Priority: 02.11.2020 IT 202000026020
(71) Applicant: CEFLA SOCIETA' COOPERATIVA, 40026 Imola (BO) (IT)
(72) Inventor: Giovannini, Cristian, 40026 IMOLA (IT)
(74) Representative: Karaghiosoff, Giorgio Alessandro

(57) **Abstract**

Method for polymerizing and/or drying photopolymerizable/dryable coatings like paints or glue applied on panels (27), comprising the following steps:
- Painting at least a panel (27) with a paint containing at least a photoinitiator sensitive to an UV radiation;
- Performing the polymerization/drying of said panel (27) inside a polymerization chamber (24) comprising an UV polymerizing lamp (25), said chamber being provided with an inert atmosphere;

in said inert atmosphere the atmospheric oxygen being totally or partially replaced by nitrogen produced at the moment of the polymerization/drying using nitrogen generating systems (3) starting from natural earth atmosphere,
characterized in that
the polymerization is carried out in an inert atmosphere comprising a variable percentage content of nitrogen between 90% and at most 99,9999% corresponding to a percentage content of oxygen between 10% and more than 0,0001%.

## Description

The present invention relates to a method and an apparatus for photopolymerizing/drying photopolymerizable chemicals through UV radiation. In particular, the invention relates to an oven for photopolymerizing/drying painted panels of sundry materials (wood, fibrocement, glass, plastics, etc.), said drying occurring in an inert atmosphere, in particular in a nitrogen atmosphere, said inert atmosphere being generated at the time when the drying takes place.

Ovens for drying panels are well known in the art, although they mainly work in earth natural atmosphere.

Mainly planar panels means panels wherein two of the three dimensions are much wider than the third dimension. Typically, their dimensions range 100x300x18 mm to 1250x2400x30 mm.

For coating surfaces of different materials, the most common industrial processes make use of products applied in liquid phase containing solvents, which later on have to be removed through evaporation: this requires long manufacturing times. Moreover, the vapours of the solvent themselves can be harmful for operators' health, and they have to be removed or absorbed in suitable filters. The process requires a huge consumption of energy, in that the parts to be dried are usually heated to facilitate solvent evaporation, and sometimes even cooled, to allow their manipulation when leaving the drying oven.

In industrial processes, using paints and glues that polymerize instead of materials requiring drying is convenient, in that curing occurs in shorter times, with a greater convenience and versatility of industrial processes. One of the known curing systems consists in irradiating the material to be polymerized with UV radiations having suitable wavelength and appropriate intensity.

The ultraviolet radiations are commonly classified according to their emission spectrum:
- UV-A: radiation with wavelength comprised between 400 and 315;
- UV-B: radiation with wavelength comprised between 315 and 280 nm:
- UV-C: radiation with wavelength comprised between 280 and 100 nm.

Nowadays UV LEDs emitting wavelengths ranging 400 to 100 nm are available on the market.

The polymerization of chemical products catalysed by light (light curing) has a peak of efficiency in correspondence of specific wavelengths. Chemical reactions are known which are catalysed by red or green visible light (as, for example, the natural photosynthetic processes that occur in plants), while chemical reactions that are catalysed by blue light are known (camphorquinone is often used as a catalyst sensitive to wavelength between 440 and 480 nm).

In order to use UV radiations to polymerize paints, said paints must contain at least a photo-initiator sensitive to UV radiation, capable of triggering the photopolymerization when said paint is exposed to UV radiation. Said photo-initiators and paints are well known in the art. Commonly used photo-initiators are e.g.: benzophenone, 1-Hydroxy-cyclohexyl-phenyl-ketone, Diphenyl (2,4,6-trimethylbenzoyl)-phosphine oxide; generally paints comprise said photo-initiators in a percentage ranging 3% to 6%.

In the art, the fact that the oxygen (O₂) present in earth atmosphere inhibits polymerization obtained through UV radiations has been known for at least 40 years. Consequently, UV polymerization in inert atmosphere (i.e. oxygen-free) is known. Typically, earth atmosphere comprises oxygen in a percentage of about 21%. Industrially, when an inert atmosphere is mandatory, oxygen is replaced by nitrogen (N₂), carbon dioxide (CO₂) or argon (Ar).

JP2009226387A of Kasai Kogyo KK describes a polymerizing oven of paints sensitive to UV radiation in an inert atmosphere. In this document, air is replaced by CO₂ (carbon dioxide), which is heavier than earth atmosphere. Consequently, the polymerization chamber is provided with an inverted trapezoidal shape; CO₂ is provided in gas cylinders.

WO2009063134A2 by Tikkurila OY describes a method and apparatus for coating an object in such a way that a UV-curable composition is applied on the surface of the object, the object is transported under an irradiation device, in which an inert gas heavier than oxygen is first delivered to the surface of the object and subsequently a second inert gas is delivered and the object is exposed to radiation. The example describes that nitrogen is produced by two oxygen generators, without providing further details on the composition of the inert gases.

US5480682 of Air Products & Chemicals Inc. discloses an improved method of producing a low-cost nitrogen-based inert atmosphere suitable for radiation polymerization of resins, coatings, etc. from non-cryogenically generated nitrogen. According to the disclosed teaching, the residual oxygen present is converted to either moisture or a mixture of moisture and carbon dioxide by making it react with a reducing gas in a catalytic reactor before using the nitrogen-based atmosphere for photopolymerization. The nitrogen atmosphere used for carrying out the photopolymerization in the disclosure of this document has an extremely low content of residual oxygen respectively 100ppm or less for the first zone and 10ppm or less for a second photopolymerization zone.

JP2007216154A of Trinity Ind. Corp. describes a plant for ultraviolet coating capable of reducing the amount of inert gas consumed and capable of carrying out an early UV photopolymerization. The system includes a preheating oven so that the hot air can act on the UV photopolymerizable coating; said oven contains said inert gas which is lighter than air. The hot air is guided in order to heat the inert gas.

WO2020174349 by the same applicant describes an apparatus for the photopolymerization/drying by passing a coating applied to articles with a prevalently flat extension, in which the articles are transported by a closed belt conveyor which has a forward branch and a return branch inside a channel in which there is a controlled atmosphere of a different composition compared to the earth's natural atmosphere thanks to the controlled delivery of a desired gas. The said apparatus is equipped with at least one lamp for the photopolymerization/drying of the coating applied to the artifacts in which said channel has a plurality of chambers placed in series, each chamber being equipped with a succession of portions having variable lumen: a first portion of a narrower lumen, a second portion of a wider lumen, a third portion of a newly narrow lumen preferably equal to lumen of the first portion. Only a generic oxygen free atmosphere is disclosed for carrying out the photopolymerization/drying.

EP3640525 by Jiangsu Goodled Prec Optoelectronics Co Ltd describes a device for UV photopolymerization and a control unit connected by means of a cable. The UV light source can be water or air cooled. The control unit is able to set the necessary parameters for the photopolymerization operations.

Nitrogen is provided with some advantages over argon and CO₂: it is a harmless gas, with a specific weight similar to that of the earth atmosphere, widely used in industry.

Using nitrogen provided in cylinders in an industrial process is known in the art; nitrogen can be provided in a gaseous or in a liquid state; nonetheless, on the market there are provided systems that generate nitrogen by extracting it from the earth atmosphere, as nitrogen represents about 78% of the gas mixture.

This second solution, although it is provided with advantages that will be explained further on, is also burdened by the limit that the quantity of nitrogen generated from atmosphere cannot overcome the production capability of the chosen generating system.

On the market, different kinds of nitrogen generators are available, e.g. provided by Isolcell in Laives (BZ, Italy). Isolcell sells at least two systems for generating nitrogen starting from the earth atmosphere:
- Nitrogen generation through hollow fibre membranes
   The nitrogen generation technology that uses hollow fibre membranes is based on a dimensional separation of oxygen and nitrogen molecules. Atmospheric compressed air is separated within hollow polymer fibres having selective permeability, resulting in the production of nitrogen with a selectable level of purity as a service gas and enriched oxygen as a waste product.
- Nitrogen generation through Pressure Swing Adsorber (PSA) systems
   Nitrogen is produced continuously from compressed air. The Nitrogen Generators consist of one or more modules of two columns filled with molecular sieves of extremely fine porosity. The compressed, dried and filtered air passes through one of the two filtering columns, which retains oxygen, residual water vapour and other rare gases. When the filtering column is saturated with oxygen, it is depressurized by discharging the oxygen into the air. At the same time, the compressed air is diverted to the other column, where the oxygen is surrendered until the next change. This cycle will continue uninterruptedly in order to fill a storage tank, which acts as a buffer to absorb any peak demand and to ensure the continuous supply of nitrogen to the process. When the tank reaches the maximum fill pressure, the generator is automatically put into stand-by mode, in anticipation of a new demand for gas.

Aim of the present invention is providing an UV oven photopolymerizing/drying chemicals applied on panels in a nitrogen atmosphere.

This object is achieved by an apparatus and a method having the features of the independent claims. Advantageous embodiments and refinements are specified in claims dependent thereon.

The apparatus according to the present invention comprises:
- A conveying system, lying on a plane, conveying pieces painted upstream the UV oven with an UV-sensitive paint;
- A polymerization chamber wherein UV irradiation occurs in an inert atmosphere, in particular a nitrogen atmosphere;
- A device capable of generating a nitrogen atmosphere connected to the UV polymerization chamber.

In this context, it is worth mentioning that the pieces are painted upstream the UV oven by an apparatus using any technology (e.g. spraying apparatus, roller apparatus, etc.). Moreover, such painting occurs in the natural atmosphere, e.g. an atmosphere containing 21% oxygen, as the inhibiting effect of oxygen on polymerization occurs only when the paint is exposed to the polymerizing irradiation.

In a preferred embodiment, the oven is supplied in continuous way.

In an embodiment, the oven is supplied in a discontinuous way.

In an embodiment, the oven is provided with mobile shutters at its ingress and egress, which are opened/closed in order to allow the ingress/egress of the painted panels, so forming an intermittently closed chamber capable of maintaining a pre-set, fixed percentage of nitrogen throughout the whole chamber.

In a preferred embodiment, the oven is provided with mobile shutters at its ingress and egress, which are opened/closed in order to allow the ingress/egress of the painted panels, so forming an intermittently closed chamber capable of maintaining a pre-set percentage of nitrogen. Inside the polymerization chamber there is provided a nitrogen gradient providing a maximum nitrogen percentage in correspondence of the polymerizing lamp, and a minimum nitrogen percentage at the ingress/egress points, due to the ingress of earth natural atmosphere coming from outside said oven.

In an embodiment, the oven may work in an inert atmosphere made of 100% nitrogen.

In a preferred embodiment, the oven works in an inert atmosphere comprising a variable percentage of nitrogen ranging 90% to at most 99,9999% (corresponding to an oxygen percentage ranging 10 to more than 0,0001%).

In fact, as it will appear more clearly from the following, from the experimental tests, it was surprisingly found that the percentage of nitrogen in the polymerization chamber need not be 100% in order to obtain an improvement in the polymerization reaction with respect to the same reaction occurring in atmospheric air.

Moreover, from the experimental data it was found that the set-up of the apparatus must comprise a combination of three parameters:
- Percentage of photo-initiator to be present in paint: such percentage in presence of an inert atmosphere can be reduced from its typical percentage ranging 3-6% to a percentage of 1-1,5%;
- Percentage of residual oxygen in the polymerization chamber: such percentage must be lower than the 21% of the natural earth atmosphere, but is not mandatorily less than 0,0001%;
- Advancing speed of the pieces to be polymerized: in the time unit, with a faster advancing speed, the quantity of radiant energy received by said pieces is lower than the quantity of radiant energy received at a slower advancing speed. Therefore, with a fast advancing speed, a lower quantity of energy is provided to the photo-initiator for triggering the polymerization reaction.

Consequently, the adjustment of said three parameters must be evaluated on a case-by-case basis (by production lot). When the minimum possible quantity of photo-initiator is to be used in the paint, e.g. because the painted panels are going to be used to manufacture bedroom furniture, the quantity of nitrogen in the polymerization chamber must be increased and/or the advancing speed of pieces to be polymerized must be reduced. Vice versa, when production speed is privileged, the quantity of photo-initiator in the paint, and/or the quantity of nitrogen in the inert atmosphere in the polymerization chamber must be increased.

A first advantage of the present invention lies in the possibility of reducing the percentage of photo-initiator in the paint, from the standard percentage of 3-6% to a percentage of 1-1.5%. This translates into an economic advantage: in fact, photo-initiators cost 15 to 100 €/kg, while liquid nitrogen provided in cylinders costs tens of euro cents per cubic meter (10-20 euro cents per m³), and gaseous nitrogen provided in cylinders costs about 1-1.5 €/m³. Nowadays a paint typically comprises a 4% of photo-initiator, costing about 12 €/kg. According to the present invention, with a reduced content of photo-initiator paint could cost 10 €/kg. Even taking into account the cost of generating nitrogen, a saving of tens of thousands of euros could be achieved, up to even 80,000 € per year for each oven.

A second advantage of the present invention is the possibility of using nitrogen generated at the time when the drying takes place, which makes the panel painter independent from the nitrogen producer and does not expose the painter at risk of lacking nitrogen when it is needed. In the case of liquid nitrogen, its reservoir, generally placed outside, when is exposed to heat (in the summer) tends to go into overpressure, and therefore to automatically empty in order to prevent the risk of exploding.

The two above-quoted advantages translate into a third advantage: a more ecologic drying process, in that a lower quantity of photo-initiator is needed in the photopolymerizable paint. photo-initiators are generally harmful to health. Moreover, in this way, transporting and storing nitrogen cylinders is not necessary, with the consequent generation of greenhouse gases linked to the transportation of cylinders containing gaseous or liquid nitrogen from its production site to the utilization site, wherein the oven is placed.

A fourth advantage is that typically the presence of photo-initiator leads to the yellowing of the painted panel; therefore, a lower quantity of photo-initiator in the panel leads to a better quality of the final product, and to a more constant quality of the final product over time.

A fifth advantage is linked to a lower release of chemicals into the environment. In fact, in addition to said photo-initiator working as a catalyst in the polymerizing reaction, provided in a low quantity, UV paints comprise a preponderant quantity of monomers that are converted into polymers by said polymerizing reaction. photo-initiators and the non-converted monomers are molecules provided with a molecular weight lower than the molecular weight of polymers, while the main emissions into the environment are made of low molecular weight molecules. The photopolymerization in inert atmosphere catalyses a bigger number of monomers than photopolymerization occurring in earth natural atmosphere. Therefore, the paint catalysed in inert atmosphere will release less monomer and photo-initiator emissions than paints catalysed in natural earth atmosphere.

A sixth advantage lies in the fact that it is not mandatory to provide a polymerization chamber containing 0% of oxygen (i.e. 100% nitrogen) or a very low content of oxygen less than 0,0001% of oxygen in the inert gas atmosphere, which contents of oxygen can be obtained by a polymerization chamber that is sealed with respect to its environment. Therefore, the polymerizing apparatus is easier to provide and can be supplied with pieces at a faster advancing speed, up to 25 meters per minute and even faster advancing speed.

Further advantages and properties of the present invention are disclosed in the following description, in which exemplary embodiments of the present invention are explained in detail on the basis of the drawings:
- Figure 1: Top view of an oven according to the present invention;
- Figure 2: Lateral section of an oven according to the present invention;
- Figure 3: Block diagram of the present invention.
- Figure 4: Diagram showing the correlation between external cross linking and photo-initiator content
- Figure 5: Diagram showing the correlation between the relative content of the photo-initiator as a function of oxygen content in the inert gas atmosphere.

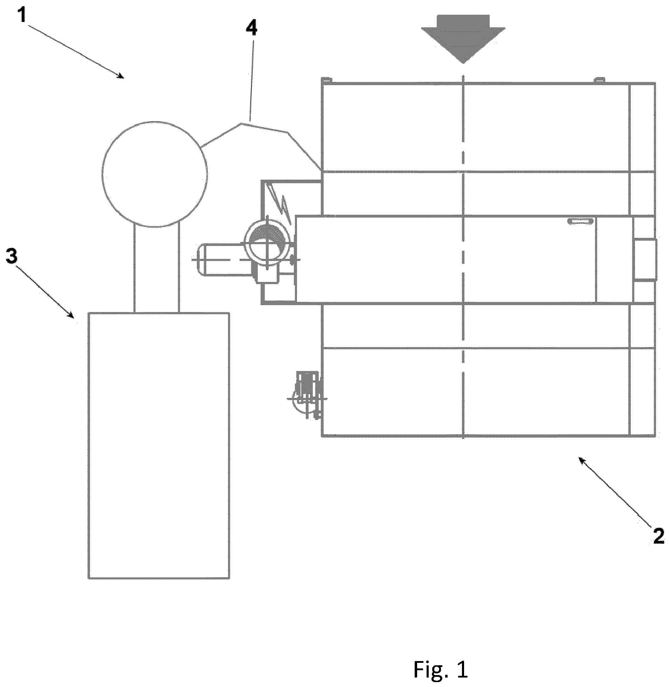

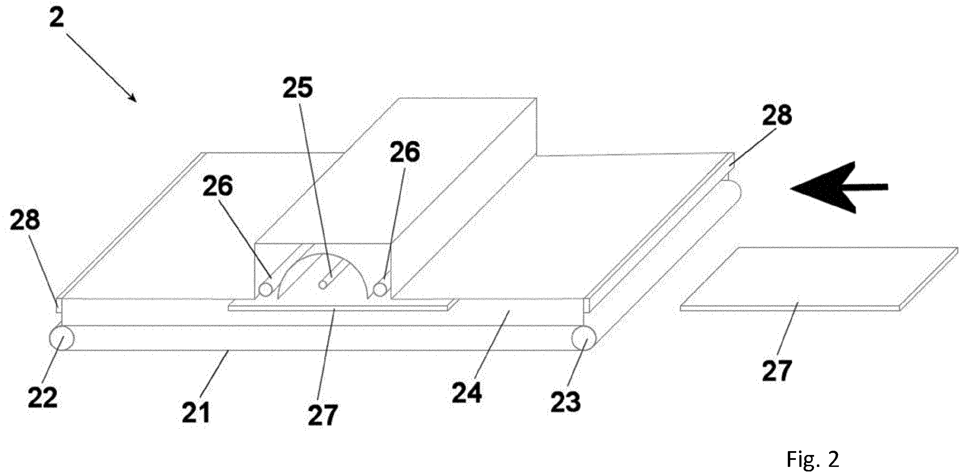

Figure 1 shows a top view of an apparatus 1 according to the present invention, comprising an oven 2 whose polymerization chamber 24 (visible in Figure 2), is supplied with nitrogen coming from a device 3 which generates nitrogen obtained from earth atmosphere at the time of polymerization. Said chamber is provided with nitrogen coming from said device 3 through a pipe 4. As explained above, on the market there are provided devices capable of generating nitrogen starting from atmospheric air, making use of different technologies. The bold arrow shows the supplying direction of pieces to be polymerized.

Although not shown in Figure 1, in practice the apparatus 1 according to the present invention is a portion of a painting line comprising a plurality of different machines placed in series: e.g., upstream the apparatus 1 there is provided at least a machine capable of painting said panels with a paint containing a photo-initiator sensitive to UV radiation. Said painting can be performed e.g., through a roller machine, or a curtain painting machine, or a spray machine, etc. The line could comprise a plurality of machines applying paint and a plurality of ovens placed in series. Downstream said apparatus 1 there is provided a storing device or an apparatus capable of sorting or packaging said panels.

Figure 2 shows a lateral section of an oven 2 according to the present invention. Said oven is provided with a device for conveying painted panels 27 to be polymerized. Said panels 27 are preferable painted panels made of sundry materials (wood, fibrocement, glass, plastics, etc.); typically, the dimensions of said panels range 100x300x18 mm to 1250x2400x30 mm. The bold arrow shows the supplying direction of said oven 2.

It will be noted that, when designing the oven 2 for a specific application or factory, the dimensions of the panels to be polymerized should be taken into account. In fact, by designing a polymerization chamber having internal dimensions as much as possible near to the biggest panels to be polymerized, the quantity of nitrogen to be provided by the device 3 can be reduced.

The quantity of nitrogen needed to fill the polymerization chamber 24 must be compatible to the quantity that said generating device 3 can provide. Therefore, the polymerization chamber is designed so as to reduce its volume with respect to the polymerization chambers of an oven working in natural earth atmosphere. Moreover, special arrangements were provided in order to prevent the ingress of atmospheric air (therefore oxygen) coming from the natural atmosphere surrounding said oven 2.

Said conveying system typically comprises a band conveyor 21 rotating around at least two rollers 22, 23, of which roller 22 is a motorized roller while roller 23 is an idle roller. Said conveyor is well known in the art.

Through said conveying device, panels 27 are inserted into the polymerization chamber 24 of said oven 22, provided with an inert nitrogen atmosphere generated by the generating device 3. Said nitrogen, in gaseous form, is provided by said device 3 through a pipe 4 and reaches at least one, preferably two bars 26 injecting nitrogen into the polymerization chamber. Said bar/s 26 is/are preferably placed on the ceiling of said polymerization chamber.

On the ceiling of the polymerization chamber 24 there is provided at last one UV polymerizing lamp 25, preferably a LED lamp. Said lamp is capable of emitting a radiation of a wavelength suitable for triggering the reaction polymerizing said paint coating said panels 27, which paint of course comprises at least a photo-initiator sensitive to the radiation emitted by said UV lamp 25.

In an embodiment, the oven may work in an inert atmosphere made of 100% nitrogen throughout the whole polymerization chamber 24.

In a preferred embodiment, in the polymerization chamber there is provided a gradient of nitrogen: the nitrogen percentage is maximum under the polymerizing lamp 25, and minimum in correspondence of the ingress and the egress of the panels to be polymerized. Obviously, the gradient is due to the natural earth atmosphere surrounding the apparatus 1. Indicatively, at the ingress/egress points there is provided a content of oxygen (inversely proportional to the content of nitrogen) of about 20%, while the oxygen content is variable between 10% and more than 0,0001% in correspondence of the polymerizing lamp 25. Consequently, the oven works in an inert atmosphere comprising a nitrogen gradient, with a variable nitrogen percentage ranging from 80% to at most 99,9999%; said gradient is variable according to the points of the polymerization chamber 24 wherein it is measured through suitable sensors 112.

In a preferred embodiment, said oven 2 is fed in a continuous way with panels 27, i.e. the conveying band 21 never stops.

In an embodiment, said oven 2 is fed in a discontinuous way: i.e. the band conveyor 21 is loaded with a panel 27; the panel is brought in correspondence of the polymerizing lamp 25; the movement of said band conveyor 21 is stopped during the irradiation of the panel, and then the movement of said band conveyor starts again, bringing said panel out of the oven 2.

In an embodiment, said oven 2 is provided with mobile shutters 28 in its ingress and egress, which are opened/closed to allow the ingress/egress of the painted panel 27, forming an intermittently closed chamber capable of maintaining the requested percentage of nitrogen.

In a preferred embodiment, under said polymerizing lamp 25 there is provided a (not shown) quartz glass, permeable to UV radiations. Said glass has a dual purpose: first, it reduces the volume that must be fed with inert atmosphere, further reducing the need of auto-produced nitrogen; second, the chamber containing said polymerizing lamp 25 can be cooled using atmosphere air: in fact, said UV lamp produces a relevant quantity of heat. Obviously, the quartz glass must be sealed, so that there is no passage of the cooling air toward the polymerization chamber 24.

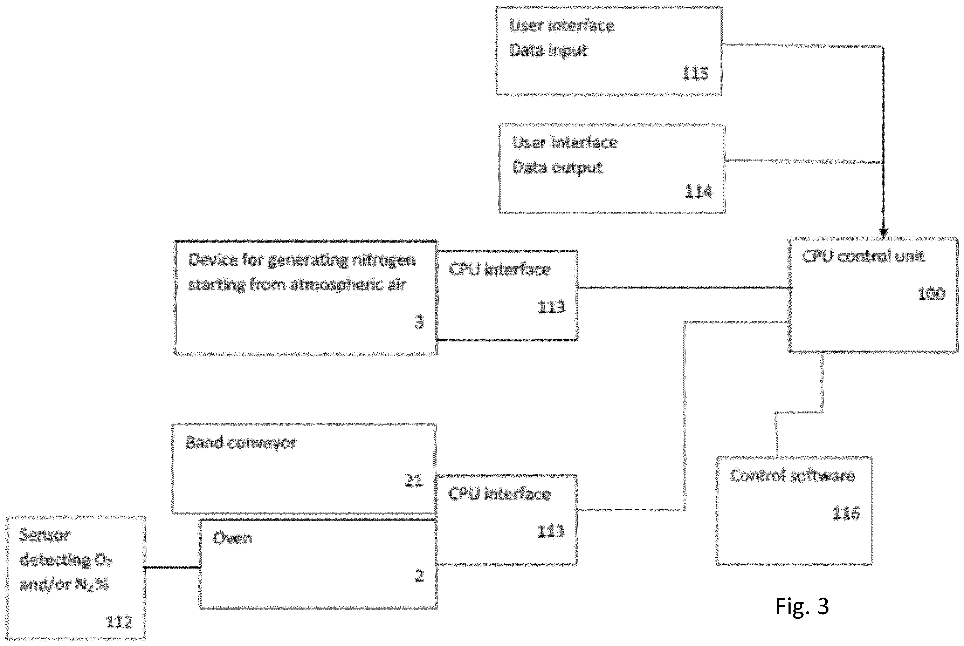

Figure 3 shows a block diagram of an embodiment of the control system of the apparatus 1 according to the present invention. The oven 2 comprising the band conveyor 21, and the device 3 for generating nitrogen starting from atmospheric air are schematically illustrated. Said band conveyor 21 and the device 3 for generating nitrogen starting from atmospheric air are each controlled independently by a control unit (CPU) 100 through an interface 113, selectively connecting each device to said control unit 100. The control unit 100 is a processing unit, e.g. in the form of a generic PLC or PC, and runs a control software 116 saved in a memory area. Said control unit 100 is further connected to a man-machine interface comprising at least an output interface 114 and an input interface 115. Through this last interface a human user can manually input the data for adjusting the percentage of nitrogen in the polymerization chamber 24, supplied by said device 3 for generating nitrogen starting from atmospheric air, and the advancing speed of the pieces to be polymerized conveyed by said band conveyor 21.

The output interface 114 provides feedback on the data input by the user through said input interface 115 and/or shows the user system notification, where appropriate.

In alternative or in combination according to the embodiment of Figure 3, the control unit 100 can be connected to at least a sensor 112 suitable for detecting the percentage of O₂ and/or N₂ inside the polymerization chamber 24, to be shown on the output interface 114.

The programmable control system, of which Figure 3 shows a non-limiting example, can control different parameters of the oven 2, in particular the advancing speed of the pieces conveyed by the band conveyor 21, and the percentage of nitrogen supplied to the polymerization chamber 24 produced by the device 3 for generating nitrogen starting from atmospheric air.

Many embodiments are possible, and these are to be considered part of the routine choices that the skilled man operates when designing a project.

Finally, it is to be noted that practical tests must be performed to define the combination of said three parameters:
- Percentage and type of UV photo-initiator to be inserted into the paint;
- Percentage of nitrogen in the polymerization chamber;
- Advancing speed of the pieces to be polymerized.

Thanks to the presence of the CPU 100, these data can be input in the memory of the oven 2, and they can be recalled, when the process and/or the paint have been already used.

Moreover, tables containing suitable combinations of said three parameters allowing to obtain desired results can be input into the permanent memory of said CPU control unit 100 of said oven 2, so that the combination of said three parameters can be recalled from said memory when setting up said apparatus 1 for a new batch.

At present, sensors suitable for evaluating the quality of polymerized paint or the percentage of monomers that converted into polymers are not available on the market. Nonetheless, should such sensors become available, they could be inserted at the end of the polymerization chamber, and be used to trigger a feed-back system for adjusting the advancing speed of panels and/or the percentage of nitrogen provided to the polymerization chamber.

### EXPERIMENTAL RESULTS

A coating consisting in an acrylic varnish 100% UV curable has been prepared with different content of a photo-initiator. The content of the photo-initiator has been set to 0,1%, 1,5%, 2,5% and 3,5%. Tablets of acridite (acrylic glass) have been coated with the said set of different coatings. Samples of different coating thickness has been generated having thickness of 15, 25, 50 and 75 micrometers. The samples has been irradiated with a mercury lamp irradiating an energy of 120W/cm². The process has been carried out at different speeds of the transporting unit namely 5m/min, 10 m/min and 15 m/min. Reticulation has been evaluated at the end of the process.

The evaluation of the reticulation has been carried out by infrared spectroscopy in a ATR mode (iS50 Spectrometer, Thermo Scientific). IR spectra have been acquired at the external surface of the coating, i.e. at the surface opposed to the one adhering to the tablets. The degree of reticulation has been evaluated at the frequency bands of 1406cm-1 and 809 cm-1.

With a reticulation degree higher of 89% calculated from the IR spectra the reticulation has been positively evaluated. With a degree of reticulation lower that 73% reticulation has been considered to be insufficient.

Furthermore, the reticulation has been carried out with the different contents of photo-initiator also in different inert gas atmospheres having a different content of residual oxygen. The inert gas atmosphere was a nitrogen atmosphere having different contents of residual oxygen.

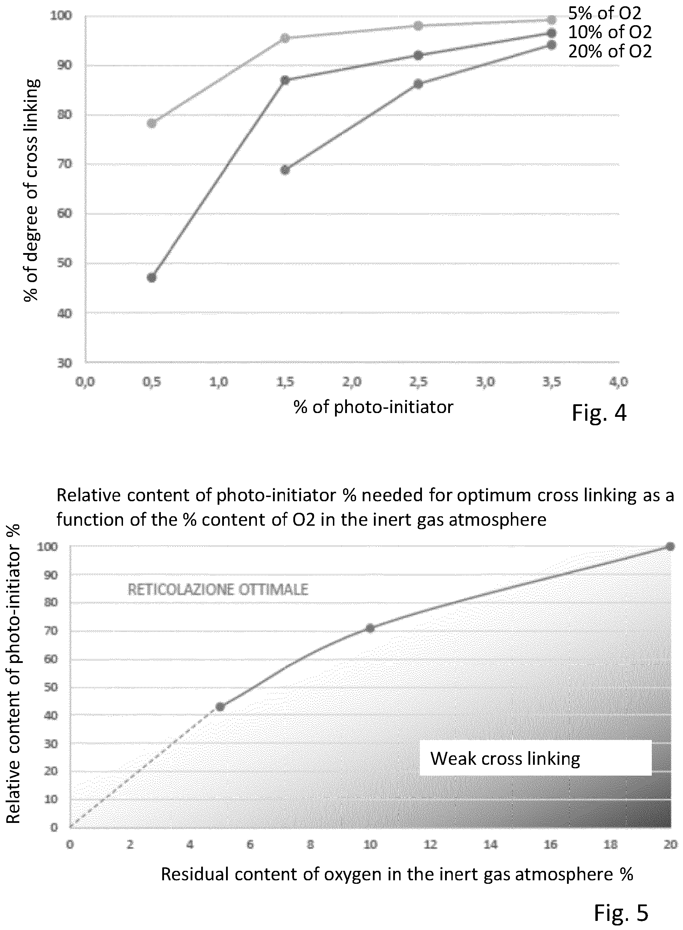

Figure 4 shows a diagram representing the correlation between external cross linking and photo-initiator content at different percentual contents of residual oxygen in the inert gas atmosphere respectively of 20%, 10% and 5%.

As it appears from the Figure 4, already with a content of 1,5% of photo-initiator the external cross-linking of the inert gas atmosphere having a residual content of 5% of oxygen was clearly above the threshold for evaluating as complete or sufficient the cross-linking of the coating. The cross-linking obtained with the same content of photo-initiator but with a content of 10% of residual oxygen in the inert gas atmosphere is very near to the threshold considered sufficient and the said threshold is overcome with a content of 2,0 % of photo-initiator.

In an unmodified atmosphere (20% of O₂), the percentage of the photo-initiator FOT012 has a very drastic effect. Passing from a photo-initiator percentage of 3.5% to 1.5%, the external crosslinking drops from 94% to 68%. By decreasing the percentage of O₂ in the atmosphere, this effect seems to flatten out. When the O₂ is at 5%, the reduction of the content of the photo-initiator from 3.5% to 1.5% determines a reduction in crosslinking of only 4 percentage points (from 99% to 95%). Furthermore, in lack of oxygen, partial crosslinking was observed even with a percentage of the photo-initiator of 0.5%.

The following table show the values of the cross-linking obtained at the different conditions.

| | 0,5% of photo-initiator | 1,5% of photo-initiator | 2,5% of photo-initiator | 3,5% of photo-initiator |
|---|---|---|---|---|
| 20% O₂ | - | 68,8 | 86,2 | 94,1 |
| 10% O₂ | 47,1 | 87,0 | 92,0 | 96,5 |
| 5% O₂ | 78,3 | 95,4 | 97,9 | 99,1 |

The data show that the degree of crosslinking achieved in standard conditions (ie unmodified atmosphere and 3.5% of content of photo-initiator) can also be achieved by reducing the percentage of the content of photo-initiator to 70% (2.5%), if the O₂ in atmosphere is 10%, or by reducing the percentage of the photo-initiator to 40% (1.5%) if the residual content of oxygen in the inert gas atmosphere is of 5%.

This is represented by the graph of Figure 5.
- 1: apparatus according to the present invention
- 2: oven
- 3: device for generating nitrogen starting from atmospheric air
- 4: pipe
- 21: band conveyor
- 22: motorized roller
- 23: idle roller
- 24: polymerization chamber
- 25: UV polymerizing lamp
- 26: bars for injecting nitrogen
- 27: panels to be polymerized
- 28: shutter
- 100: CPU control unit
- 112: O₂ and/or N₂ % sensor
- 113: CPU interface
- 114: user output interface
- 115: user input interface
- 116: control software

## Claims

1. Method for polymerizing and/or drying photopolymerizable/dryable coatings like paints or glue applied on panels (27), comprising the following steps:
- Painting at least a panel (27) with a paint containing at least a photo-initiator sensitive to an UV radiation;
- Performing the polymerization/drying of said panel (27) inside a polymerization chamber (24) comprising an UV polymerizing lamp (25), said chamber being provided with an inert atmosphere;
in said inert atmosphere the atmospheric oxygen being totally or partially replaced by nitrogen produced at the moment of the polymerization/drying using nitrogen generating systems (3) starting from natural earth atmosphere,
**characterized in that**
the polymerization is carried out in an inert atmosphere comprising a variable percentage content of nitrogen between 90% and at most 99,9999% corresponding to a percentage content of oxygen between 10% and more than 0,0001%.

2. Method for polymerizing and/or drying photopolymerizable/dryable coatings like paints or glue applied on panels (27) according to claim 1, performed through an apparatus (1) provided with a CPU control unit (100), inside which are saved combinations of the following three parameters:
- Percentage and kind of photo-initiator contained in the paint or glue;
- Percentage of nitrogen provided to the polymerization chamber (24);
- Advancing speed of the panels to be polymerized;
which are recallable from the memory of said CPU control unit (100) at the beginning of a new production batch.

3. Apparatus (1) for polymerizing/drying photopolymerizable/dryable coatings like paints or glue applied on panels (27) for carrying out the method according to claims 1 or 2, comprising an oven (2) in its turn comprising a conveying system (21, 22, 23), and a polymerization chamber (24) inside which UV radiations having a wavelength ranging 100 to 400 nm are irradiated,
**characterized in that** it comprises:
- Internal dimensions of said polymerization chamber (24) as much as possible near to the dimensions of the cross-section of the panels which have to transit inside it, taken along a plane transversal to the transit direction of the said panels,
- A device (3) for generating nitrogen starting form atmosphere for supplying said polymerization chamber (24).

4. Apparatus (1) for polymerizing/drying photopolymerizable/dryable coatings like paints or glue applied on panels (27) according to claim 3, wherein said device (3) utilizes one of the two following technologies for generating nitrogen from atmospheric air:
a) Nitrogen generation through hollow fibre membranes;
b) Nitrogen generation through Pressure Swing Adsorber (PSA) systems (PSA).

5. Apparatus (1) for polymerizing/drying photopolymerizable/dryable coatings like paints of glue applied on panels (27), according to claim 3 or 4, wherein said oven (2) is fed with panels (27) in a continuous way.

6. Apparatus (1) for polymerizing/drying photopolymerizable/dryable coatings like paints or glue applied on panels (27), according to claim 3 or 4, wherein said oven (2) is fed with panels (27) in a discontinuous way.

7. Apparatus (1) for polymerizing/drying photopolymerizable/dryable coatings like paints or glue applied on panels (27), according to one or more of the preceding claims, wherein said oven (2) is provided with mobile shutters (28) in ingress and egress, which are opened/closed in order to allow the ingress or the egress of said painted panels (27).

8. Apparatus (1) for polymerizing/drying photopolymerizable/dryable coatings like paints or glue applied on panels (27), according to one or more of the preceding claims, wherein said inert atmosphere is provided with a gradient of nitrogen ranging 80% and 99,9999%; said percentage being maximal in correspondence of the polymerizing lamp (25) and minimal in the points of ingress/egress of the panels (27).

9. Apparatus (1) for polymerizing/drying photopolymerizable/dryable coatings like paints or glue applied on panels (27), according to one or more of the preceding claims, wherein the polymerization chamber (24) is saturated with an inert atmosphere consisting of a percentage at most of99,9999% of nitrogen.

10. Apparatus (1) for polymerizing/drying photopolymerizable/dryable coatings like paints or glue applied on panels (27), according to one or more of the preceding claims, wherein under said polymerizing UV lamp (25) there is provided a quartz glass permeable to UV radiations so as to form a chamber; said chamber containing said UV lamp (25) being sealed hermetically and cooled through atmospheric air.
